# EUROPÄISCHE PATENTSCHRIFT

(11) **EP 2 931 534 B1**
(45) Veröffentlichungstag und Bekanntmachung des Hinweises auf die Patenterteilung: **04.12.2019**
(21) Anmeldenummer: 13762456.5
(22) Anmeldetag: 11.09.2013
(51) Int. Cl.: B60C 9/20, B60C 9/22

(54) **FAHRZEUGLUFTREIFEN**
PNEUMATIC VEHICLE TIRE
PNEUMATIQUE DE VÉHICULE

(30) Priorität: 17.12.2012 DE 102012112451
(43) Veröffentlichungstag der Anmeldung: 21.10.2015
(73) Patentinhaber: Continental Reifen Deutschland GmbH, 30165 Hannover (DE)
(72) Erfinder: KLEFFMANN, Jens, 30453 Hannover (DE); SCHRAMM, Joachim, 38112 Braunschweig (DE)
(74) Vertreter: Finger, Karsten
(86) Internationale Anmeldenummer: PCT/EP2013/068805
(87) Internationale Veröffentlichungsnummer: WO 2014/095099

(56) Entgegenhaltungen:
- EP-A1- 2 495 112
- EP-A2- 0 288 987
- WO-A1-2012/017399
- JP-A- H0 569 702
- JP-A- S5 977 906
- KR-B1- 100 821 549
- US-B1- 6 367 527

## Beschreibung

Die Erfindung betrifft einen Fahrzeugluftreifen in Radialbauart für Lastkraftwagen oder Omnibusse mit einem wenigstens vierlagigen Gürtel, wobei jede Gürtellage als Festigkeitsträger Stahlcorde enthält, die in jeder Gürtellage jeweils parallel zueinander verlaufen, wobei die Neigung der Stahlcorde zur Umfangsrichtung (A-A) beginnend bei der ersten, radial innersten Gürtellage, der Abfolge Rechts-Rechts-Links-Rechts oder Rechts-Rechts-Links-Links folgt und der Winkel (α), den die Stahlcorde in der ersten Gürtellage mit der Umfangsrichtung (A-A) einschließen, zwischen 45° und 70° beträgt, der Winkel (β), den die Stahlcorde in der zweiten Gürtellage mit der Umfangsrichtung (A-A) einschließen, zwischen 15° und 26° beträgt, und die Winkel (γ,δ), welche die Stahlcorde in der dritten und in der vierten Gürtellage mit der Umfangsrichtung (A-A) einschließen, jeweils zwischen 15° und 22° betragen, wobei eine der radial außerhalb der ersten Gürtellage ausgebildeten Gürtellagen als die schmalste der vier Gürtellagen ausgebildet ist, und mit einem radial außerhalb des Gürtels ausgebildeten Laufstreifen mit einer in axialer Richtung A gemessenen Laufstreifenbreite B.

Derartige Fahrzeugluftreifen sind bekannt und für viele Einsatzfälle von Nutzfahrzeugreifen besonders geeignet. Allerdings ermöglichen die im Bereich der Reifenschulter ausgebildeten axialen Erstreckungsenden der Gürtel Deformationen des Reifens im Bereich der Reifenschulter und der Seitenwand, welche den Rollwiderstand des Reifens negativ beeinflussen.

Es ist bekannt, den Gürtel mit zusätzlichen Stahlgürtellagen auszubilden, welche sich über die gesamte Breite des Gürtels erstrecken. Dies führt jedoch zu Versteifungen des gesamten Gürtels, wodurch das Abplatten des Reifens bei Durchlaufen des Reifenlatsches erschwert wird, was sich unter anderem auch wiederum negativ auf den Rollwiderstand sowie auf Abriebeigenschaften auswirken kann. Darüber hinaus erfordert die Ausbildung zusätzliche Masse des Gürtels.

Aus der DE 693 06 166 T2 ist es bekannt, einen Nutzfahrzeugreifen mit einem Vier-Lagengürtel auszubilden, bei welchem im Bereich der Reifenschulter ein zusätzlicher Schulterring aus gummiertem Gewebeband aufgelegt ist. Das Gewebeband ist dabei aus Festigkeitsträgern gewoben, wobei die miteinander verwobenen Festigkeitsträger auch Korde aufweisen, die im Wesentlichen in Umfangsrichtung erstreckt ausgebildet sind. Das gummierte Gewebeband ist dabei über den Umfang des Reifens erstreckt in zwei radial übereinander spiralig um die Reifenachse gewunden angeordneten Lagen aufgelegt. Durch die beiden übereinander gewundenen Gewebelagen kann der Rollwiderstand etwas reduziert werden. Damit das Gewebeband sich nicht öffnet, muss das Gewebeband wenigstens mit seinem Endabschnitt unter Überlappung seines Anfanges aufgelegt werden. Die Überlappung führt jedoch zur Unwucht. Hierdurch verschlechtert sich der Abrieb signifikant. Die in der DE 69 306 166 T2 explizit offenbarte Ausbildung, bei der das Gewebeband soweit überlappt ist, dass sich zwei in radialer Richtung übereinander ausgebildete Lagen bilden, bewirkt jedoch auch, dass der Gürtel mit zusätzlichen Lagen im Bereich der Gürtelkante ausgebildet ist, wodurch die Verbesserung des Rollwiderstandes negativ beeinträchtigt werden.

Darüber hinaus ist das Gewebeband in der DE 693 06 166 T2 mit relativ großem Abstand zum Rand des Laufstreifens und somit mit einem sehr großen Verhältnis aus Laufstreifenbreite B zu Breite B₀ ausgebildet. Durch die Positionierung kann das Gewebeband zwar bestimmte Bewegungen des Gürtels in seinem Gürtelrandbereich einschränken, aber nur einen geringen Einfluss auf die gesamte Deformation des Reifens in der Reifenschulter und der Reifenseitenwand ausüben. Die weiterhin große Deformationsmöglichkeit reduziert den nur im geringen Umfang vorhandenen Rollwiderstand-reduzierenden Einfluss derartiger Gewebebänder.

Aus der US 6,367,527 B1 ist ein Fahrzeugluftreifen gemäß den Merkmalen des Oberbegriffs von Anspruch 1 bekannt.

Der Erfindung liegt die Aufgabe zugrunde in einfacher Weise einen derartigen Nutzfahrzeugreifen mit wenigstens vier Gürtellagen mit Festigkeitsträgern aus Stahl mit verbessertem Rollwiderstand auszubilden ohne die Abriebleistung zu reduzieren.

Die Aufgabe wird erfindungsgemäß durch die Ausbildung eines Fahrzeugluftreifens in Radialbauart für Lastkraftwagen oder Omnibusse mit einem wenigstens vierlagigen Gürtel, wobei jede Gürtellage als Festigkeitsträger Stahlcorde enthält, die in jeder Gürtellage jeweils parallel zueinander verlaufen, wobei die Neigung der Stahlcorde zur Umfangsrichtung (A-A) beginnend bei der ersten, radial innersten Gürtellage, der Abfolge Rechts-Rechts-Links-Rechts oder Rechts-Rechts-Links-Links folgt und der Winkel (α), den die Stahlcorde in der ersten Gürtellage mit der Umfangsrichtung (A-A) einschließen, zwischen 45° und 70° beträgt, der Winkel (β), den die Stahlcorde in der zweiten Gürtellage mit der Umfangsrichtung (A-A) einschließen, zwischen 15° und 26° beträgt, und die Winkel (γ,δ), welche die Stahlcorde in der dritten und in der vierten Gürtellage mit der Umfangsrichtung (A-A) einschließen, jeweils zwischen 15° und 22° betragen, wobei eine der radial außerhalb der ersten Gürtellage ausgebildeten Gürtellagen als die schmalste der vier Gürtellagen ausgebildet ist, und mit einem radial außerhalb des Gürtels ausgebildeten Laufstreifen mit einer in axialer Richtung A gemessenen Laufstreifenbreite B, gemäß den Merkmalen von Anspruch 1 gelöst, bei dem radial außerhalb der ersten Gürtellage beiderseits in einer Position axial außerhalb des Erstreckungsbereichs der schmalsten Gürtellage jeweils ein Schulterabdeckstreifen mit einem bis fünf nebeneinander angeordneten parallelen Stahlkorden, welche mit mehreren Windungen schrauben- oder wendeiförmig um die Reifenachse gewunden angeordnet und unter Einschluss eines Neigungswinkels von maximal 5° zur Umfangsrichtung ausgerichtet sind, und bei dem die Breite B₀, welche den axialen Abstand zwischen den die beiden **Schulterabdeckstreifen** jeweils zur axialen vom Reifen weg weisenden Rändern bildet, mit (B/ B₀) ≤1,20 ausgebildet ist, wobei die Schulterabdeck streifen in radialer Richtung R zwischen erster und zweiter Gürtellage oder zwischen zweiter und dritter Gürtellage angeordnet sind.

Durch diese Ausbildung wird ermöglicht, dass gerade in dem besonders deformationsanfälligen äußeren Erstreckungsbereich der Reifenschulter und der Reifenseitenwand mit Hilfe der Schulterabdeckstreifen die Beweglichkeit des Gürtels und des Reifens deutlich eingeschränkt wird, ohne jedoch die Zahl der Gürtellagen im Ganzen oder nur im Bereich der Reifenschulter zu erhöhen. Die Ausbildung der Abdeckstreifen mit mehreren Windungen von schrauben- oder wendelförmig um die Reifenachse gewundenen Stahlcorden ermöglicht dabei eine sichere Ausbildung ohne die Gefahr des Öffnens des Schulterabdeckstreifens unter Vermeidung von in radialer Richtung übereinander angeordneten Überlappungsbereichen oder zusätzlichen Lagen. Ein Öffnen des Schulterabdeckstreifens und das Auftauchen von Unwuchten kann hierdurch sicher vermieden werden. Die Ausbildung der Schulterabdeckstreifen mit Stahlcorden, welche mit mehreren Windungen schrauben- oder wendelförmig um die Reifenachse gewunden angeordnet und unter Einschluss eines Neigungswinkels von maximal 5° zur Umfangsrichtung ausgerichtet sind, wird eine zielgerichtete Umfangsversteifung des gegen Deformation besonders kritischen Gürtelkantenaußenbereiches ermöglicht, welcher sich durch das Verhältnis (B/B₀)≤ 1,20 bis in den äußeren Erstreckungsbereich des Reifens und der Reifenseitenwand versteifend auswirkt und somit ungewünschte Deformationen des Reifens im Schulterbereich zielsicher behindert. Ein negativer Einfluss von zusätzlichem in einem Gewebe befindlichen Corden - wie zum Beispiel in der DE 693 06 166 T2 - kann verhindert werden. Die Ausbildung ermöglicht somit über die gesamte Gürtelbreite trotz Reduktion des Rollwiderstandes unter Vermeidung von Unwuchten und zusätzlicher Gürtellagen die gewünschten Eigenschaften eines Gürtels mit definierter Lagenzahl von beispielsweise vier Gürtellagen sicher umzusetzen. Hierdurch kann der Rollwiderstand deutlich reduziert werden ohne die Abriebleistung zu reduzieren.

Besonders vorteilhaft ist die Ausbildung eines Fahrzeugluftreifens gemäß den Merkmalen von Anspruch 2, wobei der **Schulterabdeckstreifen** mit einer in axialer Richtung A gemessenen Breite B₅ mit 30mm ≤ B₅≤75mm ausgebildet ist.

Besonders vorteilhaft für die Optimierung des Reifenrollwiderstandes ist die Ausbildung eines Fahrzeugluftreifens gemäß den Merkmalen von Anspruch 3, wobei längs der gesamten axialen Erstreckung des Gürtels maximal vier Lagen an Stahlkorden in radialer Richtung übereinander angeordnet sind.

Besonders vorteilhaft ist die Ausbildung eines Fahrzeugluftreifens gemäß den Merkmalen von Anspruch 4, wobei die schmalste Gürtellage die vierte Gürtellage ist.

Besonders vorteilhaft zur Erzielung eines geringen Rollwiderstandes ist die Ausbildung eines Fahrzeugluftreifens gemäß den Merkmalen von Anspruch **5**, wobei die Breite B₀ mit (Bₘₐₓ -15mm)≤ B₀≤ Bₘₐₓ ausgebildet ist, wobei Bₘₐₓ die in axialer Richtung A gemessene Breite der breitesten Gürtellage bildet.

Besonders vorteilhaft ist die Ausbildung eines Fahrzeugluftreifens gemäß den Merkmalen von Anspruch **6**, wobei das Laufstreifenprofil mit einem Rillenleervolumen (Void) von maximal 10% ausgebildet ist. Die Ausbildung ist hinsichtlich Profil und Reifenkonstruktion besonders vorteilhaft für die Erzielung eines geringen Rollwiderstandes. Gerade bei einer solchen Ausbildung kann der Rollwiderstand besonders wirksam reduziert werden ohne die Abriebleistung zu reduzieren.

Besonders vorteilhaft ist die Ausbildung eines Fahrzeugluftreifens gemäß den Merkmalen von Anspruch **7**, wobei das Verhältnis B/ B₀ mit (B/ B₀) ≤1,10 - insbesondere mit (B/ B₀) ≤1,00 - ausgebildet ist. Die Ausbildung ist hinsichtlich Profil und Reifenkonstruktion besonders vorteilhaft für die Erzielung eines geringen Rollwiderstandes. Gerade bei einer solchen Ausbildung kann der Rollwiderstand besonders wirksam reduziert werden ohne die Abriebleistung zu reduzieren.

Die Erfindung wird im Folgenden an Hand der in den Fig.1 bis Fig.3 dargestellten Ausführungsbeispiele eines Nutzfahrzeugluftreifens radialer Bauart erläutert. Darin zeigen
- Fig. 1: einen Teilquerschnitt durch die eine Hälfte eines Fahrzeugluftreifens im Bereich des Gürtels und Laufstreifens,
- Fig. 2: Teilquerschnitt durch die Gürtellagen in einer Ausführungsvariante und
- Fig. 3: eine Draufsicht auf die Gürtellagen von Fig. 2 .

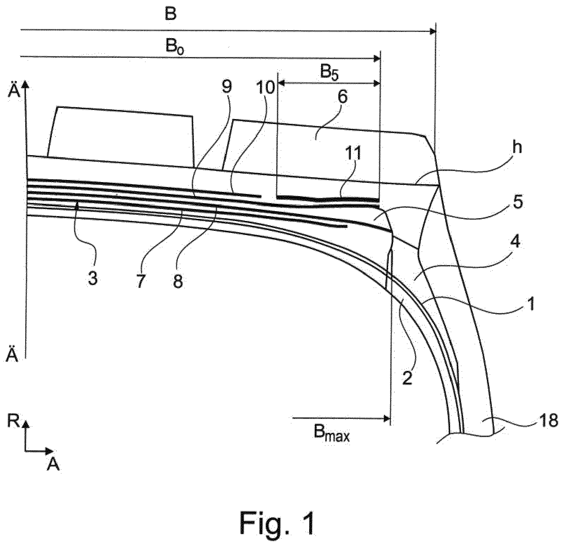

Fig. 1 zeigt einen Querschnitt durch den Laufstreifen und den Gürtelbereich eines Fahrzeugluftreifens für Lastkraftwagen oder Omnibus in einer üblichen Standardkonstruktion mit einer Karkasse 1 mit Stahlkorden als Festigkeitsträgern, mit einer luftdichten Innenschicht 2, mit einem mehrlagigen Gürtel 3, mit im Bereich der Gürtelkanten angeordneten Gummipolstern 4, 5 und mit einem profilierten Laufstreifen 6, sowie mit zwei Reifenseitenwänden 18, von denen in Fig.1 nur die rechte dargestellt ist.

Der Gürtel 3 weist vier Gürtellagen 7, 8, 9 und 10 auf, wobei die vierte, radial äußerste Gürtellage 10 die geringste in axialer Richtung A gemessene Breite von allen Lagen aufweist und die sogenannte Schutzlage bildet. Die erste Gürtellage 7 ist die sogenannte Sperrlage, die zweite Gürtellage 8 und die dritte Gürtellage 9 sind die sogenannten Arbeitslagen. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Sämtliche Gürtellagen 7, 8, 9, 10 bestehen aus in eine Gummimischung, der Gürtelgummierung, eingebetteten Festigkeitsträgern aus Stahlkord, beispielsweise der Konstruktion 3x0,2 mm + 6x0,35 mm. Es können in den Gürtellagen auch Stahlkorde anderer Konstruktionen verwendet werden.

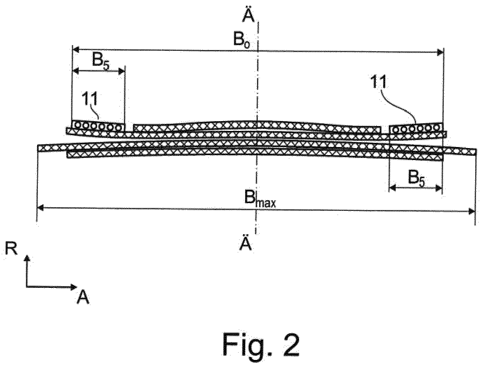

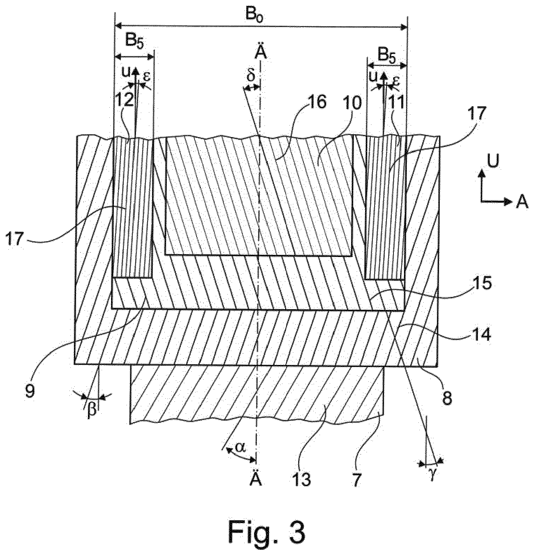

Wie Fig.2 und Fig.3 zeigt, verlaufen die Stahlkorde 13 der Lage 7, die Stahlkorde 14 der Lage 8, die Stahlkorde 15 der Lage 9 und die Stahlkorde 16 der Lage 10 innerhalb ihrer jeweiligen Lage 7, 8, 9 bzw. 10 parallel zueinander und schließen mit der durch die Linie Ä-Ä angedeuteten Umfangsrichtung (dem Reifenäquator) des Reifens bestimmte Winkel α, β, γ, δ ein. Gemäß der Erfindung sind die Stahlkorde 13, 14 in der ersten und der zweiten Gürtellage 7, 8 bezüglich der Umfangsrichtung nach rechts geneigt. Der Winkel a, den die Stahlkorde 13 der ersten Gürtellage 7 mit der Umfangsrichtung einschließen, beträgt zwischen 45° und 70°, der Winkel β, den die Stahlkorde 14 der zweiten Gürtellage 8 mit der Umfangsrichtung U einschließen, zwischen 15° und 26°. Die Stahlkorde 15 und 16 in der dritten und der vierten Gürtellage 8, 9 sind gegenüber dem Reifenäquator bzw. der Umfangsrichtung des Reifens in die andere Richtung, nach links geneigt und schließen Winkel γ und δ mit der Umfangsrichtung ein, wobei der Winkel γ von seiner Größe bzw. seinem Betrag zwischen 15° und 22° und der Winkel δ von seiner Größe bzw. seinem Betrag zwischen 15° und 22° gewählt wird. Beispielsweise ist α=50°, β=18°, γ =18° und δ=18° gewählt.

In Figur 1 ist die Laufstreifenbreite B eingetragen, sowie die Gürtelbreite Bₘₐₓ, welche die maximale axiale Erstreckung des Gürtels angibt und der Breite der breitesten Gürtellage, hier der zweiten Gürtellage 8 entspricht. Die Laufflächenbreite B ist - wie beispielsweise in der DE102009044418A1 angegeben - die Breite, die über die beiden äußeren Kanten des Laufstreifens gemessen wird in der Höhe der Mitte der Profiltiefe des Laufstreifenprofils.

Wie in den Figuren dargestellt ist, ist axial beiderseits der schmalen vierten Gürtellage 10 jeweils ein Schulterabdeckstreifen 11 der in axialer Richtung A gemessenen Breite B₅ mit 30mm ≤ B₅≤ 75mm auf der radial außerhalb der dritten Gürtellage 9 aufgewickelt. Der Schulterabdeckstreifen 11ist aus einem gummierten Stahlkord 17 längs der axialen Erstreckung des Schulterabdeckstreifens mit mehreren Windungen unter Einschluss eines Winkels ε zur Umfangsrichtung mit ε≤5° schrauben- oder wendelförmig um die Reifenachse kontinuierlich überlappungsfrei gewickelt. In anderer Ausführung ist der Schulterabdeckstreifen aus einem gummierten, bandförmigen Kautschuk- oder Gummistreifen, in welchem in Banderstreckungsrichtung ausgerichtet bis zu fünf parallele und nebeneinanderangeordneten Stahlkorden ausgebildet sind, hergestellt, wobei der bandförmigen Kautschuk- oder Gummistreifen längs der axialen Erstreckung des Schulterabdeckstreifens mit mehreren Windungen unter Einschluss eines Winkels ε zur Umfangsrichtung mit ε≤5° schrauben- oder wendelförmig um die Reifenachse kontinuierlich überlappungsfrei gewickelt. In beiden Ausführungen bildet der Schulterabdeckstreifen 11 somit eine axiale Verlängerung der vierten Gürtellage 10, wobei auch in dem Erstreckungsabschnitt der Schulterabdeckstreifen 11 die wirksame Gürtellagenzahl nicht über die im zentralen Gürtellagenabschnitt ausgebildete Zahl von Gürtellagen hinausgeht.

Der in axialer Richtung A gemessene Abstand B₀ zwischen den die beiden Schulterabdeckstreifen jeweils in axialer Richtung A nach außen hin - d.h. vom Reifen wegweisenden - Lagenenden ist mit (Bₘₐₓ -15mm)≤ B₀≤ Bₘₐₓ ausgebildet.

Die **Schulterabdeckstreifen** 11 sind so im Reifen angeordnet, dass das Verhältnis (B/ B₀) ≤1,20 ist. Im dargestellten Ausführungsbeispiel ist (B/ B₀) ≤1,10. In besonders abriebgefährdeten Nutzfahrzeugreifen wird das Verhältnis mit (B/ B₀) ≤1,0 gewählt.

Die Stahlkorde 17 sind beispielsweise Stahlkorde des Typs 3x7x0,22HE oder 3x6x0,22HE oder 4x4x0,22HE.

In den oben beschriebenen Ausführungsbeispielen sind die Stahlkorde 16 der vierten Lage 10 nach rechts geneigt ausgebildet. In anderer Ausführung sind die Stahlkorde 16 der vierten Lage 10 nach links geneigt ausgebildet.

Der Laufstreifen ist mit einem geeigneten Laufstreifenprofil mit einem Rillenleervolumen (Void) von maximal 10% ausgebildet. Dies wird im Folgenden erläutert. Parallel zur axialen Außenkontur der Laufstreifenperipherie ist in Fig. 1 eine Hilfslinie h eingezeichnet, welche die Umfangsrillen an ihren radial inneren Enden berührt und derart im Querschnitt eine parallel zur Laufstreifenperipherie in Umfangsrichtung innerhalb des Laufstreifens 1 umlaufende Einhüllende versinnbildlicht. Die durch Hilfslinie h versinnbildlichte Einhüllende, die Laufstreifenperipherie und die schulterseitigen Flankenabschnitte des Laufstreifens 6 umschließen ein Bruttovolumen V, welches die Summe des hier befindlichen Gummivolumens und des Rillenleervolumens V_{R} ist, welches seinerseits die Summe der "Luftvolumina" sämtlicher Umfangsrillen -zwischen den Rillenbegrenzungen und einer Einhüllenden der Laufstreifenperipherie ermittelt- ist. Bei dem Reifen beträgt der Anteil des Rillenleervolumens V_{R} am Bruttovolumen V maximal 10%.

In einer nicht dargestellten alternativen Ausführung ist der Fahrzeugreifen wie in den Figuren dargestellt und beschrieben ausgebildet, wobei lediglich die **Schulterabdeckstreifen** 11 nicht oberhalb der dritten Gürtellage 9, sondern in radialer Richtung R zwischen erster Gürtellage 7 und zweiter Gürtellage 8 ausgebildet sind. Die **Schulterabdeckstreifen** 11 sind auch bei dieser Ausführung axial beiderseits außerhalb der Position der schmalsten Gürtellage 10 angeordnet.

In einer anderen nicht dargestellten alternativen Ausführung ist der Fahrzeugreifen wie in den Figuren dargestellt und beschrieben ausgebildet, wobei lediglich die **Schulterabdeckstreifen** 11 nicht oberhalb der dritten Gürtellage 9, sondern in radialer Richtung R zwischen zweiter Gürtellage 8 und dritter Gürtellage 9 ausgebildet sind. Die **Schulterabdeckstreifen** 11 sind auch bei dieser Ausführung axial beiderseits außerhalb der Position der schmalsten Gürtellage 10 angeordnet.

### Bezugszeichenliste

- 1: Karkasse
- 2: Innenschicht
- 3: Gürtel
- 4: Gummipolster
- 5: Gummipolster
- 6: Laufstreifen
- 7: Gürtellage
- 8: Gürtellage
- 9: Gürtellage
- 10: Gürtellage
- 11: Gürtelabdeckstreifen
- 12: Gürtelabdeckstreifen
- 13: Stahlkord
- 14: Stahlkord
- 15: Stahlkord
- 16: Stahlkord
- 17: Stahlkord
- 18: Reifenseitenwand

## Patentansprüche

1. Fahrzeugluftreifen in Radialbauart für Lastkraftwagen oder Omnibusse mit einem wenigstens vierlagigen Gürtel (3), wobei jede Gürtellage (7, 8, 9, 10) als Festigkeitsträger Stahlcorde enthält, die in jeder Gürtellage (7, 8, 9, 10) jeweils parallel zueinander verlaufen, wobei die Neigung der Stahlcorde zur Umfangsrichtung (A-A) beginnend bei der ersten, radial innersten Gürtellage (7), der Abfolge Rechts-Rechts-Links-Rechts oder Rechts-Rechts-Links-Links folgt und der Winkel (α), den die Stahlcorde in der ersten Gürtellage (7) mit der Umfangsrichtung (A-A) einschließen, zwischen 45° und 70° beträgt, der Winkel (β), den die Stahlcorde in der zweiten Gürtellage (8) mit der Umfangsrichtung (A-A) einschließen, zwischen 15° und 26° beträgt, und die Winkel (γ,δ), welche die Stahlcorde in der dritten und in der vierten Gürtellage (9,10) mit der Umfangsrichtung (A-A) einschließen, jeweils zwischen 15° und 22° betragen, wobei eine der radial außerhalb der ersten Gürtellage (7) ausgebildeten Gürtellagen (8,9,10) als die schmalste der vier Gürtellagen (7,8,9,10) ausgebildet ist, und mit einem radial außerhalb des Gürtels (3) ausgebildeten Laufstreifen (6) mit einer in axialer Richtung A gemessenen Laufstreifenbreite B,
wobei radial außerhalb der ersten Gürtellage (7) beiderseits in einer Position axial außerhalb des Erstreckungsbereichs der schmalsten Gürtellage (10) jeweils ein Schulterabdeckstreifen (11) mit parallelen Stahlkorden (17), welche unter Einschluss eines Neigungswinkels ε von maximal 5° zur Umfangsrichtung ausgerichtet sind, angeordnet ist,
wobei die Breite B₀, welche den axialen Abstand zwischen den beiden jeweils **zu den axial** vom Reifen weg weisenden Rändern der Schulterabdeckstreifen (11) bildet, mit (B/ B₀) ≤1,20 ausgebildet ist,
**dadurch gekennzeichnet,**
**dass** der Schulterabdeckstreifen (11) mit einem bis fünf nebeneinander angeordneten parallelen Stahlkorden (17) ausgebildet ist, welche mit mehreren Windungen schrauben- oder wendelförmig um die Reifenachse gewunden angeordnet sind, und
**dass** die Schulterabdeckstreifen (11) in radialer Richtung R zwischen erster (7) und zweiter (8) Gürtellage oder zwischen zweiter (8) und dritter (9) Gürtellage angeordnet sind.

2. Fahrzeugluftreifen gemäß den Merkmalen von Anspruch 1,
wobei der Schulterabdeckstreifen (11) mit einer in axialer Richtung A gemessenen Breite B₅ mit 30mm ≤ B₅≤75mm ausgebildet ist.

3. Fahrzeugluftreifen gemäß den Merkmalen von Anspruch 1,
wobei längs der gesamten axialen Erstreckung des Gürtels (3) maximal vier Lagen an Stahlkorden in radialer Richtung R übereinander angeordnet sind.

4. Fahrzeugluftreifen gemäß den Merkmalen von Anspruch 1,
wobei die schmalste Gürtellage die vierte Gürtellage (10) ist.

5. Fahrzeugluftreifen gemäß den Merkmalen von einem der vorangegangenen Ansprüche,
wobei die Breite B₀ mit (Bₘₐₓ -15mm)≤ B₀≤ Bₘₐₓ ausgebildet ist, wobei Bmax die in axialer Richtung A gemessene Breite der breitesten Gürtellage bildet.

6. Fahrzeugluftreifen gemäß den Merkmalen von einem der vorangegangenen Ansprüche,
wobei das Laufstreifenprofil mit einem Rillenleervolumen (Void) von maximal 10% ausgebildet ist.

7. Fahrzeugluftreifen gemäß den Merkmalen von einem der vorangegangenen Ansprüche,
wobei das Verhältnis B/ B₀ mit (B/ B₀) ≤1,10 - insbesondere mit (B/ B₀) ≤1,00 - ausgebildet ist.

## Claims

1. Pneumatic vehicle tyre of a radial type for trucks or buses, comprising an at least four-ply breaker belt (3), wherein each belt ply (7, 8, 9, 10) contains steel cords as reinforcing elements, which respectively run parallel to one another in each belt ply (7, 8, 9, 10), the inclination of the steel cords relative to the circumferential direction (A-A), beginning at the first, radially innermost belt ply (7), following the sequence right-right-left-right or right-right-left-left and the angle (α) that the steel cords in the first belt ply (7) form with the circumferential direction (A-A) being between 45° and 70°, the angle (β) that the steel cords in the second belt ply (8) form with the circumferential direction (A-A) being between 15° and 26°, and the angles (γ, δ) that the steel cords in the third and fourth belt plies (9, 10) form with the circumferential direction (A-A) being respectively between 15° and 22°, wherein one of the belt plies (8, 9, 10) formed radially outside the first belt ply (7) is formed as the narrowest of the four belt plies (7, 8, 9, 10), and comprising a tread (6), which is formed radially outside the belt (3) and has a tread width B, measured in the axial direction A,
wherein there is respectively arranged radially outside the first belt ply (7) on both sides, in a position axially outside the region of extent of the narrowest belt ply (10), a shoulder cover strip (11) with parallel steel cords (17), which are arranged as forming an angle of inclination ε of a maximum of 5° in relation to the circumferential direction, wherein the width B₀ that forms the axial distance between the two of the shoulder cover strips (11) respectively to the borders leading axially away from the tyre is formed with (B/B₀) ≤ 1.20,
**characterized**
**in that** the shoulder cover strip (11) is formed with a up to five parallel steel cords (17) arranged next to one another, which are arranged in a wound fashion in the form of a screw or spiral having a plurality of turns about the tyre axis, and
**in that** the shoulder cover strips (11) are arranged in the radial direction R between the first belt ply (7) and the second belt ply (8) or between the second belt ply (8) and the third belt ply (9).

2. Pneumatic vehicle tyre according to the features of Claim 1,
wherein the shoulder cover strip (11) is formed with a width B₅, measured in the axial direction A, with 30 mm ≤ B₅ ≤ 75 mm.

3. Pneumatic vehicle tyre according to the features of Claim 1,
wherein, along the entire axial extent of the belt (3), a maximum of four plies of steel cords are arranged one on top of the other in the radial direction R.

4. Pneumatic vehicle tyre according to the features of Claim 1,
wherein the narrowest belt ply is the fourth belt ply (10) .

5. Pneumatic vehicle tyre according to the features of one of the preceding claims,
wherein the width B₀ is formed with (Bₘₐₓ - 15 mm) ≤ B₀ ≤ Bₘₐₓ, where Bₘₐₓ forms the width of the widest belt ply, measured in the axial direction A.

6. Pneumatic vehicle tyre according to the features of one of the preceding claims,
wherein the tread profile is formed with a groove void volume (void) of a maximum of 10%.

7. Pneumatic vehicle tyre according to the features of one of the preceding claims,
wherein the ratio B/B₀ is formed with (B/B₀) ≤ 1.10 - in particular with (B/B₀) ≤ 1.00.

## Revendications

1. Pneumatique de véhicule de type radial, destiné à des camions ou des autobus, comprenant une nappe d'armature (3) à au moins quatre couches, chaque couche de nappe d'armature (7, 8, 9, 10) contenant comme éléments de renfort des câbles d'acier qui s'étendent dans chaque couche de nappe d'armature (7, 8, 9, 10) à chaque fois parallèlement les uns aux autres, l'inclinaison des câbles d'acier par rapport à la direction circonférentielle (A-A) suivant, en commençant par la première couche de nappe d'armature (7) radialement la plus intérieure, la séquence droite-droite-gauche-droite ou droite-droite-gauche-gauche et l'angle (α), formé par les câbles d'acier dans la première couche de nappe d'armature (7) avec la direction circonférentielle (A-A), étant compris entre 45° et 70°, l'angle (β) formé par les câbles d'acier dans la deuxième couche de nappe d'armature (8) avec la direction circonférentielle (A-A) étant compris entre 15° et 26° et les angles (γ, δ) formés par les câbles d'acier dans les troisième et quatrième couches de nappe d'armature (9, 10) avec la direction circonférentielle (A-A), étant compris chacun entre 15° et 22°, l'une des couches de nappe d'armature (8, 9, 10) formées radialement à l'extérieur de la première couche de nappe d'armature (7) étant réalisée comme la plus étroite des quatre couches de nappe d'armature (7, 8, 9, 10), et comprenant une bande de roulement (6) formée radialement à l'extérieur de la nappe d'armature (3) et ayant une largeur de bande de roulement B mesurée dans une direction axiale A, une bande de recouvrement d'épaulement (11) munie de câbles d'acier parallèles (17), lesquels sont orientés par rapport à la direction circonférentielle en formant un angle d'inclinaison ε de 5° maximum, étant disposée à chaque fois radialement à l'extérieur de la première couche de nappe d'armature (7) des deux côtés dans une position axialement à l'extérieur de la zone d'extension de la couche de nappe d'armature la plus étroite (10),
la largeur B₀, qui forme la distance axiale entre les deux des bandes de recouvrement d'épaulement (11) respectivement aux bordures s'éloignant axialement du pneumatique, étant telle que (B/B₀) ≤ 1,20, **caractérisé en ce que** la bande de recouvrement d'épaulement (11) est formée par un jusqu'à cinq cordes d'acier parallèles (17), placées les unes à côté des autres, qui sont disposées de manière enroulée autour de l'axe du pneumatique en forme de vis ou d'hélice avec une pluralité de spires et **en ce que** les bandes de recouvrement d'épaulement (11) sont disposées dans la direction radiale R entre les première (7) et deuxième (8) couches de nappe d'armature ou entre les deuxième (8) et troisième (9) couches de nappe d'armature.

2. Pneumatique de véhicule selon les caractéristiques de la revendication 1, la bande de recouvrement d'épaulement (11) ayant une largeur B₅, mesurée dans la direction axiale A, étant telle que 30 mm ≤ B₅ ≤ 75 mm.

3. Pneumatique de véhicule selon les caractéristiques de la revendication 1, quatre couches maximum sont disposées les unes au-dessus des autres au niveau de cordes d'acier dans la direction radiale R sur toute l'étendue axiale de la nappe d'armature (3).

4. Pneumatique de véhicule selon les caractéristiques de la revendication 1, la couche de nappe d'armature la plus étroite étant la quatrième couche de nappe d'armature (10).

5. Pneumatique de véhicule selon les caractéristiques de l'une des revendications précédentes, la largeur B₀ étant telle que (Bₘₐₓ-15 mm) ≤ B₀ ≤ Bₘₐₓ, Bₘₐₓ formant la largeur, mesurée dans la direction axiale A, de la couche de nappe d'armature la plus large.

6. Pneumatique de véhicule selon les caractéristiques de l'une des revendications précédentes, le profil de bande de roulement étant formé avec un volume de vide de rainure (Void) de 10 % maximum.

7. Pneumatique de véhicule selon les caractéristiques de l'une des revendications précédentes, le rapport B/B₀ étant tel que (B/B₀) ≤ 1,10, en particulier (B/B₀) ≤ 1,00.
